# EUROPEAN PATENT APPLICATION

(11) **EP 0 994 122 A1**
(43) Date of publication of application: **19.04.2000**
(21) Application number: 98928633.1
(22) Date of filing: 22.06.1998
(51) Int. Cl.: C08B 37/00

(54) **ACETYLFUCOIDAN PREPARED FROM OKINAWA NEMACYSTIS DECIPIENS AND PROCESS FOR PREPARING THE SAME**

(30) Priority: 03.07.1997 JP 21543197; 09.09.1997 JP 28594897; 15.06.1998 JP 20422098
(71) Applicant: Tako, Masakuni, Okinawa 904-2172 (JP)
(72) Inventor: Tako, Masakuni, Okinawa 904-2172 (JP)
(74) Representative: Wain, Christopher Paul
(86) International application number: JP9802793
(87) International publication number: WO9901478

(57) **Abstract**

An acetylfucoidan having a molecular ratio of L-fucose : D-xylose : D-glucuronic acid : acetic acid : sulfuric acid of (3.0 to 5.0) : (0.03 to 0.3) : (0.5 to 1.5) : (0.1 to 1.5) : (0.5 to 1.5) is prepared from algae or spores of *Cladosiphon okamuranus* by using a mixer (a homogenizer), an acid (sulfuric acid, hydrochloric acid, or oxalic acid), barium chloride (or barium acetate), filtration thorugh diatomaceous earth, a continuous centrifugal separator, an electrodialyzer, an ultrafilter, a spray dryer, a freeze dryer and the like.

## Description

### FIELD OF THE INVENTION

This invention relates to a technique for preparing a new acetylfucoidan with high purity including an acetic acid from a natural or an aquacultural *Cladosiphon okamuranus* easily, which is applicable to pharmaceuticals as a low cholesterol formulation, a gastric ulcer antagonist, an AIDS virus antagonist, an antisticking bacteria antagonist, a humid agent, a thickener and a supplying agent of an L-fucose, functional foods, cosmetics, biotechnology and any other industries.

### BACKGROUND OF THE INVENTION

A fucoidan has not been prepared industrially and sold yet although it is a material that is available to extremely extensive fields as stated above. The greatest reason is that a marine algae including the fucoidan abundantly has not been discovered.

The fucoidan is one of a polysaccharide coexisting with an alginic acid in *phaeophyceae,* and the fucoidan that is segregated from *Laminaria* and *Undaria* has been ever known. However, the segregating and purifying condition is complicated because the alginic acid exists in these marine algae abundantly.

On the other hand, in Okinawa prefecture, *Cladosiphon okamuranus* is produced by aquaculture in addition to a natural one, and an amount of production by aquaculture is going to increasing. It is the present inventor that first makes clear containing many fucoidan in *Cladosiphon okamuranus* produced by aquaculture. Moreover, this fucoidan is new polysaccharide including an acetic acid. The fucoidan including the acetic acid has not been known in inside and outside countries.

Although the fucoidan is being prepared and sold in the little unit (5g) by a chemicals maker in the United States of America (Sigma Corporation) for chemical analysis now (material of marine algae: *Fucus vesiculosus,* which is a kind of fucus), no company which is preparing and selling the fucoidan exists in Japan.

However, since the fucoidan prepared and sold by Sigma Corporation has pigment (brown), it is found that the purifying condition is not satisfactory. Accordingly, it is desired earnestly that a technique to prepare the fucoidan with pure-white and high quality will be invented and that the fucoidan will be supplied in inside and outside countries as an entirely new material.

It is well known that a fucoidan exists in *Nemacystus.* For example, according to Nishide et al, they have reported that sugars ratio composing molecule of the fucoidan that is segregated from a natural *Cladosiphon okamuranus* is L-fucose : D-xylose : D-galactose : D-mannose : L-rhamnose = 92 : 2 : 1 : 2 : 1, and in addition to those components, it contains D-glucuronic acid (11.3%) and sulfuric acid is contained 35.2% (Hydrobiologia, volume 204/205, 573-576 (1990) ; Journal of Japanese Fisheries Society, volume 53, 1083-1088 (1987)).

Also, according to Fujikawa et al, they have reported that the component sugars in *Nemacystus decipiens* are almost L-fucose and it contains a little (1% or so) D-xylose and D-galactose, an uronic acid does not exist in it, and the sulfuric acid is contained 35% in it (Agric. Biol. Chem., volume 39, 1115-1122 (1975)).

It is clarified in the present invention that the fucoidan that exists in aquacultural *Cladosiphon okamuranus* contains an acetic acid. The fucoidan including the acetic acid has not been known in inside and outside countries. Also, sugars ratio composing molecule in the present invention is different from the result by Nishide et al. Consequently, it is a new fucoidan.

On the other hand, although a technique segregating the fucoidan from *Laminaria* has already been established, a technique segregating it from *Cladosiphon okamuranus* has not been.

Although *Cladosiphon okamuranus* belongs to *Phaeophyceae* like *Laminaria,* the two differ in formation and physiologically, entirely. Consequently, since *Laminaria* contains a large quantity of alginic acid as compared with the fucoidan, the condition segregating the fucoidan from *Laminaria* is complicated.

Conversely, it is clarified that the present algae is most suitable for a algae supplying the fucoidan since the content of alginic acid is very little in an aquacultural *Cladosiphon okamuranus.* If the fucoidan is segregated from *Cladosiphon okamuranus* by the condition of the present invention, it is possible to obtain the fucoidan with pure-white and high quality by a very simple method, and the obtained fucoidan is not contaminated with the alginic acid entirely.

Further, it is desirable that the fucoidan with pure-white and high quality is obtained from not only an aquacultural *Cladosiphon okamuranus* but also a natural *Cladosiphon okamuranus.*

An object of the present invention is to establish a technique supplying the new acetylfucoidan like this to the markets in inside and outside countries at a low price.

### DISCLOSURE OF THE INVENTION

The technical subject of the present invention is solved by the following means. The first invention is an acetylfucoidan whose molecular composition ratio of sugars (L-fucose, D-xylose and D-glucuronic acid), acetic acid, and sulfuric acid is L-fucose : D-xylose : D-glucuronic acid: acetic acid: sulfuric acid = (3.0 to 5.0) : (0.03 to 0.3) : (0.5 to 1.5) : (0.1 to 1.5) : (0.5 to 1.5).

The fucoidan that contains an acetic acid as composition like this has not been known yet. Also, it is a new fucoidan whose composition ratio of sugars (L-fucose, D-xylose and D-glucuronic acid) and sulfuric acid in addition to an acetic acid has not been known yet.

Then, the fucoidan that has this molecular composition ratio is produced from a natural or an aquacultural *Cladosiphon okamuranus* in large quantities. Moreover, the fucoidan with pure-white and high quality can be obtained.

The second invention is a method for preparing an acetylfucoidan, which is characterized in that the acetylfucoidan having a molecular composition ratio of L-fucose: D-xylose : D-glucuronic acid: acetic acid: sulfuric acid of (3.0 to 5.0) : (0.03 to 0.3) : (0.5 to 1.5) : (0.1 to 1.5) : (0.5 to 1.5) can be obtained from phycobiont and spores of *Cladosiphon okamuranus* by using a mixer (a homogenizer), an acid (sulfuric acid, hydrochloric acid, or oxalic acid), barium chloride (or barium acetate), a filtration through diatomaceous earth, a continuous centrifugal separator, an electrodialyser, an ultrafilter, a spray dryer, a freeze dryer and the like.

In the present specification *"Cladosiphon okamuranus"* is called *"Cladosiphon okamuranus TOKIDA"* as a scientific term, and it implies an aquacultural and a natural ones.

It is easy to obtain a fine acetylfucoidan with high purity and pure-white by the preparing method like this because an alginic acid is hardly contained in *Cladosiphon okamuranus.*

The third invention is characterized by a method for preparing an acetylfucoidan by treating *Cladosiphon okamuranus* with a mixer or a homogenizer, dispersing it in acid solution (sulfuric acid, hydrochloric acid, or oxalic acid of 0.01 to 0.2 % by mole), extracting the acetylfucoidan from the solution at the room temperature (10 to 35 degrees centigrade), treating it with a filtration through diatomaceous earth or a continuous centrifugal separator after neutralizing it by alkali, and performing a freeze drying, a spray drying, or depositing it by alcohol with an electrodialysis treatment or without the treatment.

Besides, if the *acetylfucoidan* is extracted by water after treating *Cladosiphon okamuranus* with the mixer or the homogenizer, it is desirable to heat-treat it at room temperature to 100 degrees centigrade.

It is possible to easily extract the acetylfucoidan by water in addition to extracting the acetylfucoidan from *Cladosiphon okamuranus* by acid and it is able to prepare the acetylfucoidan with simple preparing process.

The fourth invention is a method for preparing an acetylfucoidan in case of having different molecular weight by dispersing *Cladosiphon okamuranus* in solution prepared by pH 1.0 to 3.0 (using sulfuric acid, hydrochloric acid, or oxalic acid), treating it at 45 degrees centigrade for 1 to 3 hours with agitating and heating, and preparing the acetylfucoidan after fraction using an ultrafilter with a different molecular cutoff.

Besides, it is possible to prepare the acetylfucoidan with different molecular weight using an ultrafilter after making a fucoidanase that decomposes the acetylfucoidan into matter with low molecular weight act on the acetylfucoidan.

Partial decomposed acetylfucoidan has possibility showing many biological activity. Therefore, it is possible to extend the application and use of the fucoidan.

The fifth invention is a method for preparing an acetylfucoidan by dissolving the light brown acetylfucoidan prepared by the conditions of the third and/or fourth invention in barium chloride solution using a freeze dryer, desalting after eliminating impurities from the solution by filtering through diatomaceous earth layer or by a continuous centrifugal separator, and preparing the acetylfucoidan with pure-white and high quality by freeze drying, spray drying, or alcohol treatment.

Therefore, by preparing the pure-white fucoidan, it is possible to have an application and an use of the fucoidan as a medicament (an anti-blood coagulation agent, an anti-cancer drug and the like).

The sixth invention is characterized by an acetylfucoidan that is characterized in that a molecular composition ratio of L-fucose : D-xylose : D-glucuronic acid: acetic acid : sulfuric acid is (3.5 to 5.0) : (0.1 to 0.3) : (0.5 to 1.5) : (0.0 to 1.5) : (0.5 to 1.5), which is obtained through culture of phycobiont and spores (scutellum) of *Cladosiphon okamuranus.*

The alkali treatment fucoidan containing the different contents of acetic acid is the same as that of a fucoidan that is extracted by water or acid physicochemically. The fucoidan that has a little contents of acetic acid group has a possibility having a new biological activity.

The seventh invention is characterized by a method for preparing an acetylfucoidan by treating *Cladosiphon okamuranus* with a mixer or a homogenizer, extracting a fucoidan with agitating after adding water, acid or alkali into the treated *Cladosiphon okamuranus,* treating it with a filtration through diatomaceous earth or a continuous centrifugal separator after neutralization in case of the latter (using acid or alkali), and obtaining the fucoidan that differs in the degrees of substitution of acetic acid group by using spray drying, alcohol, or freeze dryer.

The method for extracting the fucoidan by alkali in addition to by water and acid is simpler than the method for extracting it from *Laminaria, Undaria* and the like. Therefore, it is able to prepare it at a low cost.

### BRIEF DESCRIPTION OF THE DRAWINGS

In the accompany drawings:
Fig.1 is a ¹H-NMR spectrum for a fucoidan that is extracted from *Cladosiphon okamuranus* by acid; and
Fig.2 is a ¹H-NMR spectrum for a fucoidan that is extracted from *Cladosiphon okamuranus* by alkalescence.

### DESCRIPTION OF THE PREFERRED EMBODIMENTS

A preferred embodiment with respect to how an acetylfucoidan that is obtained from natural or aquacultural *Cladosiphon okamuranus* and the preparing method are actually concretized according to the present invention will now be described below.

As a result of paying attention to the above mentioned problems and examining them variously, the inventor could prepare a fucoidan by destroying cell wall of *Cladosiphon okamuranus* using a mixer or a homogenizer, extracting the fucoidan from the destroyed matter by acid (sulfuric acid, hydrochloric acid, or oxalic acid of 0.01 to 0.2% by mole), filtering the extracted matter or neutralizing it by alkali before filtering, and desalting by an electrodialyser or treating with alcohol, spray drying, or freeze drying without desalting.

It is not observed being entrapped the alginic acid in the fucoidan prepared like this condition. Also, it is not observed the entrapped alginic acid in the fucoidan that is extracted with heating (90 to 100 degrees centigrade) and agitating by water. However, since this fucoidan has light brown, it is named as the "crude fucoidan".

As a result of examining conditions variously to purify the above mentioned crude fucoidan, it is able to prepare a white fucoidan with high quality by treating the crude fucoidan with a filtration through diatomaceous earth after dissolving the crude fucoidan that is produced by a freeze dryer into barium chloride (or barium acetate) solution.

Although the fucoidan that is prepared like this is barium salt type, it is able to prepare the fucoidan of a sodium (or potassium) salt type by neutralizing the fucoidan with the barium salt type by sodium hydroxide (or potassium hydroxide) after desalting by a cation-exchange resin (IR-120) in order to change the barium salt type into the sodium (or potassium) salt type.

Table 1 shows one example of chemical analysis values of the sodium type fucoidan.

**Table1**

| Chemical analysis value of a fucoidan (%, weight / weight) | | | | | | |
|---|---|---|---|---|---|---|
| | Yeild | Total Sugars | Uronic Acid | Sulfuric Acid | Ash Content | Water Content |
| Fucoidan | 2.0 | 67.0 | 13.2 | 12.0 | 22.3 | 3.0 |

Besides, the yield is calculated to a wetting phycobiont. Also, the contents of total sugars and the uronic acid are determined by the phenol-sulfuric acid method and the carbazole-sulfuric acid method. Furthermore, the content of sulfuric acid is quantified by an ion chromatograph QIC (made by Nihon Dionex Co., Ltd.).

After the purified fucoidan (Na-type) is dissolved in sulfuric acid of 2N, and hydrolyzed by heating the solution at 100 degrees centigrade for 2 hours and neutralized, an uronic acid is removed by an anion exchange resin (IRA-450). Then, neutral sugars are separated, identified and quantified by liquid chromatograph SLC-6B (column, Shim Pack ISA-07; Shimazu Corporation). It is determined that the neutral sugars are L-fucose and D-xylose.

Also, as a result of determining ratio of both the sugars from both the areas of the obtained chromatogram, the ratio of L-fucose and D-xylose is (95 to 97) : (3 to 5). Moreover, D-glucose is identified by a liquid chromatography after deoxidizing the fucoidan by sodium borohydride and hydrolyzing it by sulfuric acid. It is clarified that D-glucuronic acid exist in the fucoidan that is prepared from an aquacultural *Cladosiphon okamuranus* from this result.

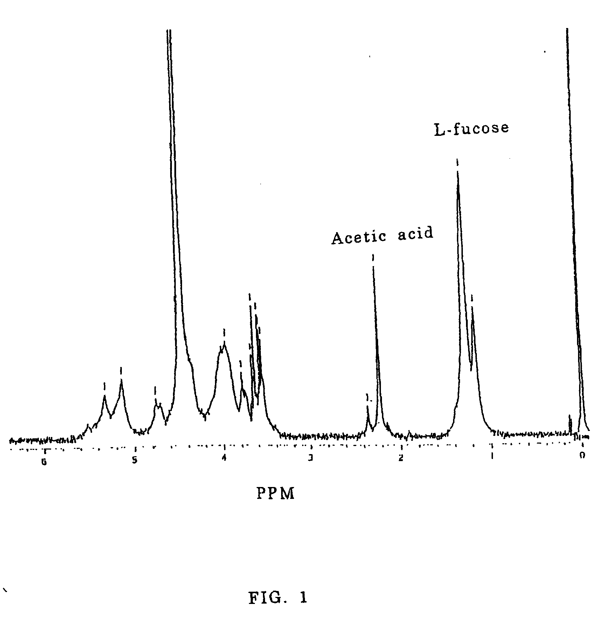

Fig.1 shows a result of a ¹H-NMR measurement (500MHz: made by JEOL Co., Ltd.) of purified fucoidan (Na-type) that is dissolved in heavy water. The absorption (at 2.2 PPM) derived from methylproton of acetic acid is recognized near the methylproton of L-fucose (at 1.2 to 1.4 PPM). Then, it is for the first time clarified that this fucoidan has an acetic acid group.

From the area ratio of both absorption, it is found that L-fucose and acetic acid exist with ratio (3.0 to 5.0) : (0.1 to 1.5) in the fucoidan. It is found that the fucoidan segregated from an aquacultural *Cladosiphon okamuranus* not only differs in composition of fucoidan and sugars which are contained in another *Nemacystas (Sphaerotrichia divaricata, Tinocladia,* and *Nemacystus decipiens)* and *Laminaria (K.crassifolia Miyabe, Laminaria angustata, Laminaria japonica var. ochotensis* and *Laminaria religiosa), Undaria pinnatifida, Eisenia bicyclis, Hizikia fusiformis, Ecklonia cava, Ishige okamurse, Sargassum horneri, Sarassum ringoldiunum, Sargassum thunbergii, Fucus* and the like, and the content of sulfuric acid but also contains an acetic acid.

Here, a polysaccharide that has an L-fucose segregated from an aquacltural *Cladosiphon okamuranus* for a main component is named as "acetylfucoidan".

Table 2 shows a calculated molecular composition ratio of sugars, acetic acid, and sulfuric acid in an acetylfucoidan.

**Table 2**

| Molecular composition ratio of sugars, acetic acid and sulfuric acid in an acetylfucoidan | | | | | |
|---|---|---|---|---|---|
| | L-fucose | D-xylose | D-glucuronic Acid | Acetic Acid | Sulfuric acid |
| Acetylfucoidan | 3.0-5.0 | 0.03-0.3 | 0.5-1.5 | 0.1-1.5 | 0.5-1.5 |

The fucoidan that is composed from the constituted molecules and ratio like this is unknown in inside and outside countries. Consequently, it is clarified that this acetylfucoidan is a new polysaccharide.

By the way, as a result of studying chemical composition of the fucoidan obtained by the above mentioned method, it is found to substitute acetic acid group in fucoidan abundantly. However, because it is found that this acetic acid is easily dissociated from a fucoidan on alkali condition, the relationship between the degree of substitution of acetic acid and alkali concentration will be clarified next.

The inventor perceives the above mentioned problems, then a fucoidan can be prepared by adjusting *Cladosiphon okamuranus* that is destroyed by a mixer or a homogenizer in alkaline solution (of 0.01 to 0.50 moles), extracting the fucoidan (at room temperature, for 2 hours), neutralizing it by acid, and treating it with a spray dryer, an alcohol, or a freeze drying. Table 3 shows chemical analysis value of the fucoidan in case of treating with sodium hydroxide of 0.012 moles.

**Table 3**

| Chemical analysis value of a fucoidan with alkali treatment (%, weight/weight) | | | | | | |
|---|---|---|---|---|---|---|
| | Yield | Total Sugars | Uronic Acid | Sulfuric Acid | Ash Content | Water Content |
| Fucoidan | 1.9 | 68.5 | 14.0 | 11.0 | 21.5 | 2.9 |

Further, the yield is caluculated to a wetting phycobiont. Also, the contents of the total sugars and the uronic acid is determined by the phenol-sulfuric acid method and the carbazole-sulfuric acid method. Furthermore, L-fucose and D-xylose are quantified by a liquid chromatography.

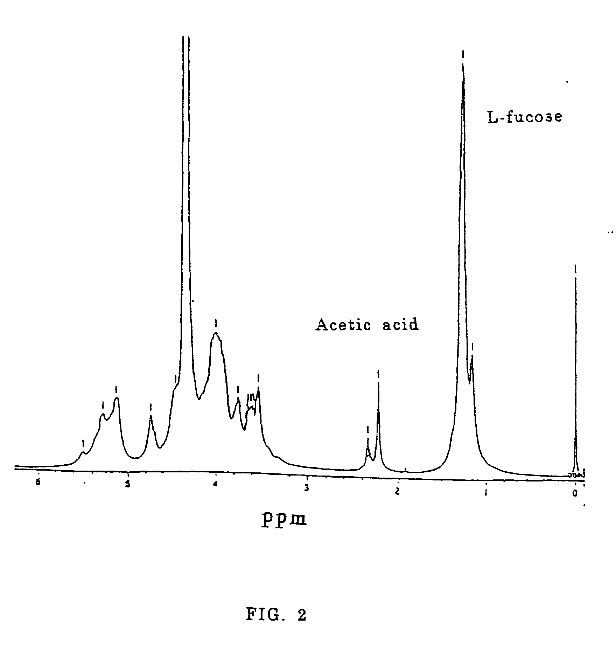

Fig. 2 shows a ¹H-NMR spectrum (500MHz: made by JEOL Co., Ltd.) of the fucoidan that is treated with this condition. From the area ratio of signal of methylproton, a molecular composition ratio both the molecules is about 9.0 : 1.0. Since the molecular composition ratio of L-fucose and acetic acid in the fucoidan that is extracted by water or acid is 5.0 : 1.0 or 4.8 : 1.0, respectively, acetic acid decrease to about 1/2 in case of the above mentioned alkaline condition.

Extracting the fucoidan from Cladosiphon okamuranus with varying concentration of alkali (of 0.01 to 0.50 moles), the content of acetic acid group fluctuates. Namely, the content of acetic acid group decreases remarkably, in the case of treating *Cladosiphon okamuranus* with alkali solution with high concentration (for example, concentration of acetic acid is 0% in condition of using sodium hydroxide of 0.2 moles and agitating it at room temperature for 2 hours).

A composed molecules ratio of the fucoidan that is obtained by treating the fucoidan with alkali solution having various concentration in addition to the fucoidan that is extracted by water is calculated and shown in Table 4.

**Table 4**

| Composed molecules ratio of sugurs, acetic acid and sulfuric acid in a fucoidan | | | | | |
|---|---|---|---|---|---|
| | L-fucose | D-xylose | D-glucronic Acid | Acetic Acid | Sulfuric Acid |
| Fucoidan | 3.5-5.0 | 0.1-0.3 | 0.5-1.5 | 0.0-1.5 | 0.4-1.5 |

Next, examples preparing an acetylfucoidan from *Cladosiphon okamuranus* will be mentioned.

### EXAMPLE 1

After agitating what hydrochloric acid of 2L of 0.1 moles is added to 50 g of drying body of a fresh aquacultural *Cladosiphon okamuranus* (made by Chinen fisheries cooperative association in Okinawa prefecture) at room temperature for 3 hours, it is filtered through diatomaceous earth layer. Then the transparent liquid with light brown is obtained.

An acetylfucoidan of 22 g can be obtained by neutralizing this liquid by adding alkali (sodium hydroxide or potassium hydroxide of 1.0 moles), depositing an acetylfucoidan by adding twofold quantity of alcohol to the neutralized matter, and drying it with decompressing. Also, the acetylfucoidan can be prepared in great quantities (20 g) by neutralizing the liquid by alkali, desalting it by an electrodialyser (made by Tokuyama Soda Co., Ltd.), and using a freeze dryer or a spray dryer.

In case the acetylfucoidan is extracted after dispersing the aquacultural *Cladosiphon okamuranus* in sulfuric acid or oxalic acid solution and agitating the solution at room temperature for 3 hours, the many acetylfucoidan can be obtained (20 g and 19 g, respectively) like the case using hydrochloric acid. The acetylfucoidan prepared like this has a light brown.

In order to prepare the acetylfucoidan with pure-white and high quality, the acetylfucoidan of 7.7 g can be obtained by dispersing the acetylfucoidan of 10 g that is prepared by using a freeze dryer in the above mentioned condition in barium chloride solution of 500 mL of 0.1 moles, dissolving it with agitating (for 1 hour), performing a filtration through diatomaceous earth, and depositing the acetylfucoidan by alcohol.

Sodium type or potassium type acetylfucoidan can be obtained by desalting the pure-white acetylfucoidan through the column of a cation-exchange resin and neutralizing it by sodium hydroxide or potassium hydroxide in order to convert this pure-white acetylfucoidan to sodium type or potassium type acetylfucoidan. The molecular weight of the acetylfucoidan prepared like this condition is 500,000 to 600,000.

### EXAMPLE 2

An acetylfucoidan with different molecular weight can be prepared by dispersing a fresh aquacultural *Cladosiphon okamuranus* of 15 g in hydrochloride acid of 500 mL with pH 3.0, and agitating it for 1, 2, or 3 hours with heating at 45 degrees centigrade. These molecular weight is about 200,000, 100,000, or 50,000, respectively.

Also, the acetylfucoidan with target molecular weight can be prepared by performing treatment of an ultrafiltration membrane (polysulfone film which has a molecular cutoff of 500,000, 100,000, or 200,000) with different molecular cutoff.

Moreover, the acetylfucoidan with target different molecular weight can be prepared by partial-decomposing the acetylfucoidan with acting fucosidase (made by Sigma Corporation), and performing treatment of the above-mentioned ultrafiltration film with different molecular cutoff.

### EXAMPLE 3

A transparent liquid with light brown can be obtained by adding sodium hydroxide of 2 L of 0.01 moles to drying body of a fresh *Cladosiphon okamuranus* of 50 g, agitating it at room temperature for 3 hours, and performing filtration through diatomaceous earth layer. The fucoidan of 21 g can be obtained by neutralizing this liquid by adding hydrochloric acid, depositing the fucoidan by adding twofold quantity of alcohol to the neutralized matter, and drying it with decompressing. When measured ¹H proton of this fucoidan by NMR of 500 MHz, the absorption derived from acetic acid has been disappeared.

### INDUSTRIAL AVAILABILITY

It is discovered that a new acetylfucoidan containing acetic acid that has been unknown up to date exists in an aquacultural *Cladosiphon okamuranus* in great quantities.

Being based on the present invention, it is possible to prepare the acetylfucoidan with high quality (pure-white) and inexpensiveness besides, from not only aquacultural *Cladosiphon okamuranus* but also natural one. Therefore, it is very useful on industry and also in the field of effective utilization of algae because it is utilizable for not only pharmaceuticals, functional foods, and cosmetics but also biotechnology and other fields.

By the present invention, it is clarified that the aquacultural *Cladosiphon* okamuranus is most suitable for algae supplying a fucoidan. According to the present invention, it is possible to not only develop a *Cladosiphon okamuranus* industry but also create a new preparing industry.

Also, an amount of the acetic acid group has fluctuated in the case of extracting natural or aquaclutural *Cladosiphon okamuranus* by alkali solution with various concentration in addition to extracting it by water or acid. However, in these fucoidans, although an amount of a fucoidan only fluctuates remarkably, the property as a fucoidan dose not change. Then, it is able to supply these fucoidan to many fields (pharmaceuticals, foods, cosmetics, and other industries) in great quantities.

## Claims

1. An acetylfucoidan characterized in that a molecular composition ratio of sugars (L-fucose, D-xylose, and D-glucuronic acid), acetic acid, and sulfuric acid is L-fucose : D-xylose : D-glucuronic acid : acetic acid : sulfuric acid = (3.0 to 5.0) : (0.03 to 0.3) : (0.5 to 1.5) : (0.1 to 1.5) : (0.5 to 1.5).

2. A method for preparing an acetylfucoidan characterized in that the acetylfucoidan having a molecular composition ratio of L-fucose : D-xylose : D-glucuronic acid : acetic acid : sulfuric acid of (3.0 to 5.0) : (0.03 to 0.3) : (0.5 to 1.5) : (0.1 to 1.5) : (0.5 to 1.5) can be obtained from phycobiont or spores of *Cladosiphon okamuranus* by using a mixer (a homogenizer), an acid (sulfuric acid, hydrochloric acid, or oxalic acid), barium chloride (or barium acetate), a fritration through daitomaceous earth, a continuous centrifugal separator, an electrodialyzer, an ultrafiltration machine, a spray dryer and a freeze dryer and the like.

3. A method for preparing an acetylfucoidan characterized in that the acetylfucoidan can be obtained by treating *Cladosiphon okamuranus* with a mixer or a homogenizer, dispersing it in an acid (sulfuric acid, hydrochloric acid, or oxalic acid of 0.01 to 0.2 moles) solution, extracting the acetylfucoidan at room temperature (10 to 35 degrees centigrade), filtering it through daitomaceous earth or neutralizing it by alkali, treating it with continuous centrifuging separetor, treating it with an electrodialyzer or without, and performing freeze drying, spray drying, or depositing it alcohol.

4. A method for preparing an acetylfucoidan with different molecular weight characterized in that the acetylfucoidan can be obtained by dispersing *Cladosiphon okamuranus* in solution that is prepared pH 1.0 to 3.0 (using sulfuric acid, hydrochloric acid or oxalic acid), treating it with heating and agitating at 45 degrees centigrade for 1 to 3 hours, and making it fraction by an ultrafiltration machine with different molecular cutoff.

5. A method for preparing an acetylfucoidan characterized in that the acetylfucoidan with pure-white and high quality can be obtained by dissolving an acetylfucoidan with light brown that is prepared by the condition of Claim 3 and/or Claim 4 using freeze dryer, desalting it after eliminating insoluble matter by a filtration through daitomaceous earth layer or a continuous centrifugal separator, and performing freeze-drying, spray drying, or alcohol treatment.

6. An acetylfucoidan characterized in that the acetylfucoidan has a molecular composition ratio of L-fucose : D-xylose : D-glucuronic acid : acetic acid : sulfuric acid of (3.5 to 5.0) : (0.1 to 0.3) : (0.5 to 1.5) : (0. to 1.5) : (0.5 to 1.5), that is obtained by cultivating algae and spore (scutellum) of *Cladosiphon okamuranus.*

7. A method for preparing an acetylfucoidan characterized in that a fucoidan with different degrees of substitution of acetic acid group can be obtained by treating *Cladosiphon okamuranus* with a mixer or a homogenizer, extracting a fucoidan with agitating it in addition to water, acid or alkali, treating it with a filtration through daitomaceous earth or a continuous centrifugal separator after neutralization in the case of the latter, and treating it with a spray drying, an alcohol or a freeze dryer.
